# EUROPÄISCHE PATENTANMELDUNG

(11) **EP 2 420 123 A1**
(43) Veröffentlichungstag der Anmeldung: **22.02.2012**
(21) Anmeldenummer: 11401570.4
(22) Anmeldetag: 15.08.2011
(51) Int. Cl.: A01C 15/00

(54) **Mit unter einem Luftüberdruck setzbarer Vorratsbehälter**

(30) Priorität: 19.08.2010 DE 102010037063
(71) Anmelder: Amazonen-Werke H. Dreyer GmbH & Co. KG, 49205 Hasbergen (DE)
(72) Erfinder: Pokriefke, Michael, 27798 Hude (DE); Schröder, Olaf, 27798 Hude (DE); van Zoest, Ralf, 46767 Twist (DE)

(57) **Zusammenfassung**

Mit unter einem Luftüberdruck setzbarer Vorratsbehälter (1) einer landwirtschaftlichen Verteilmaschine, wobei der Vorratsbehälter (1) in seinem oberen Bereich zumindest eine Einfüllöffnung (2) aufweist, wobei die Einfüllöffnung (2) durch zumindest ein Deckelelement (3) zumindest annähernd druckdicht verschließbar ist, wobei das Deckelelement (3) ein die Einfüllöffnung (2) übergreifendes Rahmenelement (6) aufweist, wobei das Rahmenelement (6) mit einem planenartigen und die Einfüllöffnung (2) abdichtend zusammenwirkenden Abdeckmittel (7) versehen ist, wobei das planenartige Abdeckmittel (7) zumindest auf der der Einfüllöffnung (2) zugewandten Seite des Rahmenelementes (6) in abdeckender Weise angeordnet ist, wobei an dem planenartigen Abdeckmittel (7) ein umlaufendes Dichtelement (8), welches der Kontur der Einfüllöffnung (2) zumindest annähernd entspricht und mit dem die Einfüllöffnung (2) umfassenden Wandelementen des Vorratsbehälters (1) zusammenwirkt, angeordnet ist. Um eine verbesserte und geschützte Anordnung für das Dichtelement (8) vorzuschlagen, ist vorgesehen, dass das Dichtelement (8) zwischen dem Rahmenelement (6) des Deckels (3) und dem planenartigen Abdeckmittel (7) angeordnet ist.

## Beschreibung

Die Erfindung betrifft ein mit unter einem Luftüberdruck setzbarer Vorratsbehälter gemäß des Oberbegriffes des Patentanspruches 1.

In der nicht veröffentlichten DE 10 2009 026 331 ist ein mit unter einem Luftüberdruck setzbarer Vorratsbehälter einer landwirtschaftlichen Verteilmaschine beschrieben. Die Einfüllöffnung ist mittels eines die Einfüllöffnung übergreifenden Rahmenelementes, wobei das Rahmenelement mit einem planenartigen und die Einfüllöffnung abdichtend zusammenwirkenden Abdeckmittel versehen ist, abdeckbar. Dem planenartigen Abdeckmittel ist auf der der Behälteröffnung zugewandten Seite ein Dichtelement zugeordnet. Das Dichtelement ist ungeschützt angeordnet, so dass es im rauen praktischen landwirtschaftlichen Einsatz zu Beschädigungen des Dichtenelementes kommen kann.

Der Erfindung liegt die Aufgabe zu Grunde, eine verbesserte und geschützte Anordnung für das Dichtelement vorzuschlagen.

Diese Aufgabe der erfindungsgemäß dadurch gelöst, dass das Dichtelement zwischen dem Rahmenelement des Deckels und dem planenartigen Abdeckmittel angeordnet ist.

Infolge dieser Maßnahme wird in einfacher Weise das Dichtelement durch das planenartige Abdeckmittel geschützt.

Eine besonders vorteilhafte Ausgestaltung des Deckelelementes lässt sich dadurch erreichen, dass zusätzlich ein planartiges Abdeckmittel auf der der Einfüllöffnung abgewandten Seite des Rahmenelementes in abdeckender Weise angeordnet ist und mit dem sich auf der der Einfüllöffnung zugewandten Seite Rahmenelementes befindlichen Abdeckmittel verbunden ist.

Weitere Einzelheiten der Erfindung sind der Beispielsbeschreibung und den Zeichnungen zu entnehmen. Hierbei zeigen
- Fig. 1: den Vorratsbehälter einer landwirtschaftlichen Verteilmaschine mit in Öffnungsstellung sich befindlichen Deckelelement in perspektivischer Darstellung,

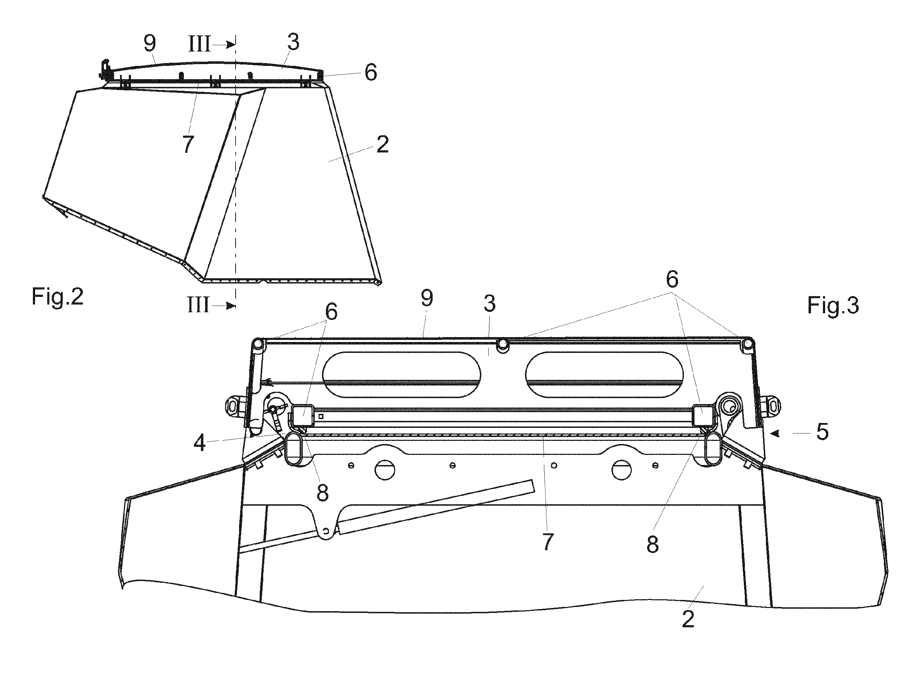

- Fig. 2: den Vorratsbehälter gemäß Fig. 1 in der Ansicht von vorn mit sich in Schließposition befindlichen Deckelelement und
- Fig. 3: den oberen Bereich des Vorratsbehälters mit sich entschließt Position befindlichen Deckelelement im Schnitt III - III unter größerem Maßstab.

Der Vorratsbehälter 1 mit dem Deckelelement ist für eine pneumatische Verteilmaschine, beispielsweise Sämaschine oder Düngerstreuer mit einem pneumatischen Druckdosiersystem vorgesehen. Bei einem derartigen Druckdosiersystem wird der Vorratsbehälter 1 mit einem Luftüberdruck gegenüber dem Atmosphärendruck beaufschlagt. Hierzu muss die Einfüllöffnung 2 des Vorratsbehälters 1 mit einem Deckelelement 3 druckdicht verschlossen werden.

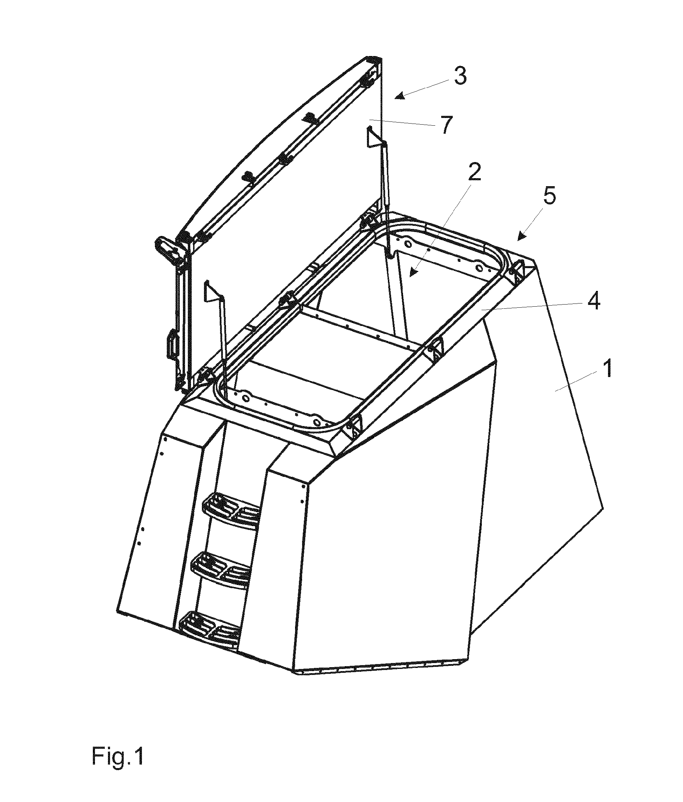

Die Einfüllöffnung 2 ist im oberen Bereich des Vorratsbehälters 1, im Ausführungsbeispiel in der oberen Vorratsbehälterwand 4, angeordnet. Hierbei weist die Einfüllöffnung 2 eine Größe und Form auf, die zumindest annähernd der Größe und Querschnittsform des Vorratsbehälters 1 in seinem oberen Bereich 5 entspricht, wie beispielsweise der Fig. 1 zu entnehmen ist.

Das Deckelelement 3 weist ein Rahmenelement 6 in Leichtbauweise auf. Dieses Rahmenelement 6 übergreift die Einfüllöffnung 2. Das Rahmenelement 6 ist zunächst auf seiner Unterseite mit einem planartigen und die Einfüllöffnung 2 abdichtend zusammenwirkenden planartigen Abdeckmittel 7 versehen. Im Ausführungsbeispiel ist als planartiges Abdeckmittel eine reißfeste luftdichte Plane 7 vorgesehen. Das planartige Abdeckmittel 7 ist über das Rahmenelement 6 gespannt, so dass das planartige Abdeckmittel 7 in bespannter Weise an dem Rahmenelement 6 angeordnet ist.

Das planartige Abdeckmittel 7 ist also auf der der Einfüllöffnung 2 zugewandte Seite des Rahmenelementes 6 in abdeckender Weise angeordnet.

Zwischen dem planartigen Abdeckmittel 7 und dem Rahmenelement 6 ist das umlaufende Dichtlippenelement 8, welches der Kontur der Einfüllöffnung 2 entspricht, in geschützter Weise angeordnet. Das Dichtlippenelement 8 wirkt mit dem die Einfüllöffnung 2 umfassenden Wandelement 4 des Vorratsbehälters 1 zusammen. Das Dichtelement 8 ist in der Weise angeordnet, dass es der Kontur der Einfüllöffnung 2 entspricht und dem mit planartigen Abdeckmittel 7 und dem Wandelement 4 in abdichtender Weise zusammenwirkt, wenn das Deckelement 3 auf die Einfüllöffnung 2 abdeckt. Das Deckelelement 3 wird in der Verschlussstellung in geeigneter Weise mit dem Vorratsbehälter 1 verriegelt.

Zusätzlich ist ein weiteres planenartigen Abdeckmittel 9 auf der der Einfüllöffnung 2 abgewandten Seite des Rahmenelementes 6 in abdeckender Weise angeordnet. Das planenartigen Abdeckmittel 9 ist mit dem sich auf der Einfüllöffnung 2 zugewandten Seite des Rahmenelementes 6 sich befindlichen Abdeckmittels 7 verbunden.

## Patentansprüche

1. Mit unter einem Luftüberdruck setzbarer Vorratsbehälter einer landwirtschaftlichen Verteilmaschine, wobei der Vorratsbehälter in seinem oberen Bereich zumindest eine Einfüllöffnung aufweist, wobei die Einfüllöffnung durch zumindest ein Deckelelement zumindest annähernd druckdicht verschließbar ist, wobei das Deckelelement ein die Einfüllöffnung übergreifendes Rahmenelement aufweist, wobei das Rahmenelement mit einem planenartigen und die Einfüllöffnung abdichtend zusammenwirkenden Abdeckmittel versehen ist, wobei das planenartige Abdeckmittel zumindest auf der der Einfüllöffnung zugewandten Seite des Rahmenelementes in abdeckender Weise angeordnet ist, wobei an dem planenartigen Abdeckmittel ein umlaufendes Dichtelement, welches der Kontur der Einfüllöffnung zumindest annähernd entspricht und mit dem die Einfüllöffnung umfassenden Wandelementen des Vorratsbehälters zusammenwirkt, angeordnet ist, **dadurch gekennzeichnet, dass** das Dichtelement (8) zwischen dem Rahmenelement (6) des Deckels (3) und dem planenartigen Abdeckmittel (7) angeordnet ist.

2. Vorratsbehälter nach Anspruch 1, **dadurch gekennzeichnet, dass** zusätzlich ein planartiges Abdeckmittel (9) auf der der Einfüllöffnung (2) abgewandten Seite des Rahmenelementes (6) in abdeckender Weise angeordnet ist und mit dem sich auf der der Einfüllöffnung (2) zugewandten Seite Rahmenelementes (6) befindlichen Abdeckmittel (7) verbunden ist.
